**Europäisches Patentamt**

**European Patent Office**

**Office européen des brevets**

(11) Veröffentlichungsnummer: **0 172 334**

**A2**

## (12) EUROPÄISCHE PATENTANMELDUNG

(21) Anmeldenummer: **85107156.3**

(22) Anmeldetag: **11.06.85**

(51) Int. Cl.⁴: **C 02 F 1/58**
**C 02 F 1/34**

(30) Priorität: **02.08.84 DE 3428533**

(43) Veröffentlichungstag der Anmeldung:
**26.02.86 Patentblatt 86/9**

(84) Benannte Vertragsstaaten:
**AT BE CH DE FR GB IT LI NL SE**

(71) Anmelder: **Uhde GmbH**
**Friedrich-Uhde-Strasse 15**
**D-4600 Dortmund 1(DE)**

(71) Anmelder: **Siekmann, Helmut E. Prof. Dr.-Ing.**
**Hermannstrasse 3A**
**D-1000 Berlin 37(DE)**

(72) Erfinder: **Siekmann, Helmut E. Prof. Dr.-Ing.**
**Hermannstrasse 3A**
**D-1000 Berlin 37 (Zehlendorf)(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) **Verfahren und Vorrichtung zum Entfernen leicht flüchtiger Stoffe aus Fluiden, insbesondere zur Behandlung von Abwässern.**

(57) Die Erfindung schafft ein Lösung, mit der leicht flüchtige Stoffe, insbesondere aus Abwässern, entfernt werden können. Verfahrensgemäß geschieht dies dadurch, daß das zu behandelnde Fluid aus einem Hochbehälter abgeleitet, über wenigstens einen Rohrkrümmer umgelenkt und dann einem Fallrohr derart zugeführt wird, daß sich vor, in und nach dem Rohrkrümmer wenigstens bereichsweise in der Strömung eine Kavitationszone ausbildet, wobei der kavitierte Teilstrom in der Kavitationszone abgetrennt wird und vorrichtungsmäßig dadurch, daß die Vorrichtung mit einem Hochbehälter (1), einem vorzugsweise horizontalen Auslaufstutzen (2), wenigstens einem sich an den Auslaufstutzen (2) anschließenden Rohrkrümmer (3) sowie einem Fallrohr (4) und mit einem Regelventil (5) im Bereich des Fallrohrendes ausgerüstet ist.

EP 0 172 334 A2

./...

**"Verfahren und Vorrichtung zum Entfernen leicht flüchtiger Stoffe aus Fluiden, insbesondere zur Behandlung von Abwässern"**

Die Erfindung richtet sich auf ein Verfahren und eine Vorrichtung zum Entfernen leicht flüchtiger Stoffe aus Fluiden, insbesondere zur Behandlung von Abwässern.

Der Siedepunkt von Flüssigkeiten ist stark druckabhängig. Mit abnehmendem Druck wird auch die Siedetemperatur kleiner. Bei starken Unterdrücken, wie sie bei großen Strömungsgeschwindigkeiten oder bei Absenken des Umgebungsdruckes auftreten können, kann der Druck örtlich bis auf den Siededruck sinken. Derartige Verhältnisse kommen bei hydrodynamischen Strömungsmaschinen wie Pumpen, Turbinen, Propellern, z.B. bei der Umströmung von Turbinenschaufeln usw., häufig vor. Der beschriebene Vorgang wird Kavitation genannt. Bei ihm scheidet die Flüssigkeit Dampf und Gasblasen aus, die zur Hohlraumbildung führen. Bei wieder ansteigendem Druck ist diese Erscheinung mit heftigem Zusammenfallen der Blasen, sogenannte Stoßkondensation, verbunden (E. Truckenbrodt, "Steuerungsmechanik", Springer Verlag 1968, Seite 15 oder Dubbel "Taschenbuch für den Maschinenbau, Springer-Verlag 1983, Seite 893).

Ist diese Erscheinung wegen der Möglichkeit des Anfressens des angeströmten Materiales und wegen der durch die Kavi- tation hervorgerufenen erheblichen Geräusche teilweise unerwünscht, so kann dieses Phänomen vielfach auch nutzbringend eingesetzt werden, insbesondere beispielsweise auf die Abtötung von Keimen in Abwasser unterstützend wirken. Hiermit beschäftigt sich die DE-PS 24 55 633.

Bei dieser bekannten Verfahrensweise wird in Zonen mit einer zum Abtöten von Keimen ausreichenden Ozonkonzentration in das Wasser eine so große Schallenergie eingeleitet, daß Kavitation auftritt, wodurch sich eine Steigerung der keimtötenden Wirkungen des Ozons in dem Abwasser erreichen läßt. Diese bekannten Maßnahmen, Kavitation durch Schall zu erzeugen, sind apparativ sehr aufwendig. Bekannt ist es auch, Kavitation durch einen Kavitator zu erzeugen, der im wesentlichen einer Zentrifuge entspricht. Auch dieser Aufwand ist vergleichsweise groß.

Aufgabe der Erfindung ist die Schaffung einer Lösung, mit der leicht flüchtige Stoffe aus Fluiden, insbesondere aus Abwasser gestrippt werden können.

Bei einem Verfahren der eingangs bezeichneten Art wird diese Aufgabe gemäß der Erfindung dadurch gelöst, daß das zu behandelnde Fluid aus einem Hochbehälter abgeleitet, über mindestens einen Rohrkrümmer umgelenkt und dann einem Fallrohr derart zugeführt wird, daß sich in und nach dem Rohrkrümmer wenigstens bereichsweise in der Strömung eine Kavitationszone ausbildet, wobei der kavitierte Teilstrom in der Kavitationszone entnommen wird.

Mit diesem Verfahren wird erreicht, daß in den sich in der Kavitationszone bildenden Wasserdampfblasen der zu strippende Stoff anreichert, da der Dampfdruck in diesen Blasen entsprechend der Wassertemperatur sehr niedrig ist. Durch Abscheiden der Kavitationszone aus dem Hauptstrom, wird eine lokale Anreicherung mit diesen Schadstoffen bzw. leicht flüchtigen Stoffen erreicht.

Ausgestaltungen der Verfahrensweise ergeben sich dadurch, daß das zu behandelnde Fluid einer Mehrzahl von hintereinander und/oder parallel geschalteten Kavitationszonen zugeführt wird.

Wesentlich für die Erfindung ist auch, daß der abgetrennte Strömungsteil mit dem Konzentrat an leicht flüchtigen Stoffen einem Tropfenabscheider zugeführt wird, wobei je nach Behandlungsweise vorgesehen sein kann, daß die Dampfzone des abgetrennten Teilstromes mit einem Brüdenverdichter abgesaugt und ggf. ganz oder teilweise nachfolgend in einem Kondensator kondensiert wird.

Zur Lösung der weiter oben angegebenen Aufgabe sieht die Erfindung auch eine Vorrichtung vor, die sich dadurch auszeichnet, daß sie mit einem Hochbehälter, einem vorzugsweise horizontalen Auslaufstutzen, wenigstens einem sich an den Auslaufstutzen anschließenden Rohrkrümmer sowie einem Fallrohr und mit einer Regelarmatur im Bereich des Fallrohrendes ausgerüstet ist.

Diese Vorrichtung ist vergleichsweise einfach, aber sehr wirkungsvoll. Insbesondere ist es mit ihr möglich, die Ausbildung der Kavitation durch ganz einfache konstruktive Mittel zu steuern und den jeweiligen Bedürfnissen anzupassen.

Wesentlich für die Erfindung ist eine Gestaltung der Vorrichtung die darin besteht, daß im Bereich des Fallrohres nach dem Rohrkrümmer Einrichtungen zur Entnahme bzw. Abtrennung des kavitierten Strömungsanteiles von der Hauptströmung vorgesehen sind. Mit dieser Maßnahme kann die Vorrichtung einer Vielzahl von Anwendungszwecken zugeführt werden. So kann z.B. durch diese Einbauten erreicht werden, leicht flüchtige Stoffe, die sich im hohen Maße im Kavitationsbereich anreichern, dort abzuziehen und einer weiteren Verarbeitung oder Entsorgung zuzuführen. In gleicher Weise kann man eine solche Vorrichtung dann auch z.B. zur Destillation von Fluidgemischen benutzen, wenn beispielsweise chlorierte Kohlenwasserstoffe abgetrennt werden sollen, mit dicht aneinanderliegenden Siedepunkten.

Nach der Erfindung ist auch vorgesehen, daß sich das Fallrohr in seinem Durchmesser nach den Abtrenneinbauten erweitert. Grundsätzlich könnte dieser Bereich auch bereits dort beginnen, wo die Einbauten vorgesehen sind. Die Erweiterung unterhalb dieses Bereiches ermöglicht aber dort gezielt den Druck so ansteigen zu lassen, daß die Kavitation in der gewünschten Ausbildung entsteht.

Die Erfindung sieht auch vor, daß eine Mehrzahl von Rohrkrümmern mit anschließenden Fallstrecken mit Abtrenneinrichtungen des jeweiligen kavitierten Strömungsanteiles hintereinander und/oder parallel vorgesehen sind. Eine solche Folge von Rohrkrümmern und Fallstrecken ermöglicht es ganze Spektren von Medien zu entnehmen oder aber ein zu behandelndes Fluidvolumen in einem sehr großen Teil den jeweiligen Kavitationsbereichen zu unterwerfen.

Sinnvoll kann es auch sein, wenn unterhalb des Fallrohres ein Auffangbecken sowie eine Pumpeneinrichtung zur Rückförderung der Flüssigkeit in den Hochbehälter vorgesehen sind. Dies ist insbesondere dann nützlich, wenn die zu behandelnde Flüssigkeit mehrfach einer Kavitationsbehandlung unterworfen werden soll.

Nach der Erfindung kann des weiteren vorgesehen sein, daß zur weiteren Behandlung des aus dem Hauptstrom entfernten kavitierten Strömungsanteiles Flüssigkeitsabscheider

und/oder Brüdenverdichter und/oder Kondensatoren vorgesehen sind, wobei diese Anlageteile sich insbesondere danach richten, welche Art von Fluiden behandelt werden und welche Verfahren durchgeführt werden sollen.

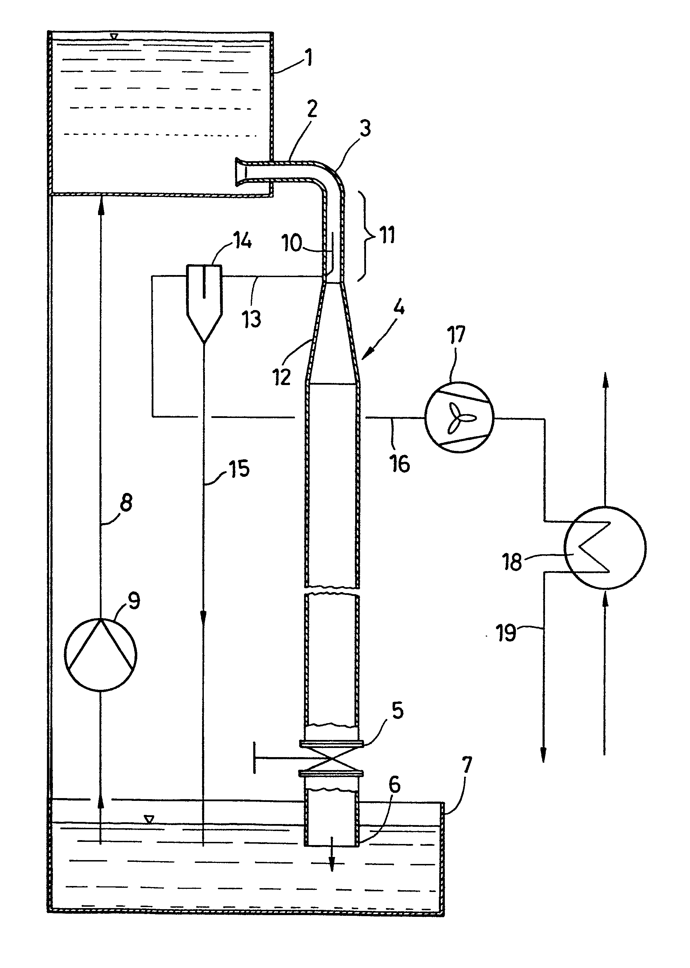

Die Erfindung ist nachstehend anhand der Zeichnung beispielsweise näher erläutert. Diese zeigt in der einzigen Figur eine Vorrichtung nach der Erfindung.

Ein Hochbehälter 1 ist im dargestellten Beispiel mit einem horizontalen Auslaufstutzen 2 ausgerüstet, der über einen Rohrkrümmer 3 in ein allgemein mit 4 bezeichnetes Fallrohr mündet.

Das Fallrohr 4 ist in Schwerkraftrichtung ausgerichtet und weist an seinem unteren Ende eine Regelarmatur 5 auf. Mit seiner Austragöffnung 6 mündet das Fallrohr 4 in ein Auffangbecken 7. Vom Auffangbecken 7 führt eine Rückführleitung 8 über eine Pumpe 9 wieder in den Hochbehälter 1.

Wesentlich für die Erfindung sind der Rohrkrümmer 3, Einrichtungen 10 unmittelbar hinter dem Rohrkrümmer 3 in einem senkrechten Rohrstück, welches mit einer Klammer 11 bezeichnet ist und die Kavitationsstrecke darstellen soll. Die Kavitationsbedingungen sind bereits vor dem Rohrkrümmer 3 gegeben, doch es läßt sich erst im Rohrkrümmer aufgrund des radialen Druckgefälles eine Trennung des dampfförmigen und flüssigen Teilstromes erreichen. Hinter den Einrichtungen 10, z.B. Ablenkblechen mit Absaugdüsen, erweitert sich das Fallrohr 4 trichterförmig. Dieser Bereich ist mit 12 bezeichnet.

Die Einrichtungen 10 sind, wie bereits erwähnt, mit einer Absaugleitung 13 ausgerüstet, die im dargestellten Beispiel in einem Flüssigkeitsabscheider 14 mündet. Die abgeschiedene Flüssigkeit wird über eine Leitung 15 dem Auffangbecken 7 zugeführt. Die behandelten Brüden werden im dargestellten Beispiel über eine Leitung 16, einem Brüdenverdichter 17, von dort einem Wärmetauscher bzw. Kondensator 18 zugeführt. Die Kondensatableitung ist mit 19 bezeichnet.

Natürlich ist das beschriebene Ausführungsbeispiel der Erfindung noch in vielfacher Hinsicht abzuändern, ohne den Grundgedanken zu verlassen. So ist die Erfindung insbesondere nicht auf eine spezifische Querschnittsform, insbesondere des Krümmers und des Fallrohres, beschränkt. Hier kann ein für Rohre üblicher kreisrunder Querschnitt ebenso vorgesehen sein, wie ein ovaler, ein eckiger oder ein solcher nach einem polygonen Zug. Auch die Umlenkung im Krümmer muß nicht zwingend so gestaltet sein, wie in der Abbildung wiedergegeben. Statt der 90° Umlenkung können Ablenkbereiche zwischen 45° und 135° vorgesehen sein. Dies kommt wiederum auf das Verfahren an, in dem die Vorrichtung eingesetzt werden soll oder auch auf die
Medien die behandelt werden sollen.

Patentansprüche:

1. Verfahren zum Entfernen leicht flüchtiger Stoffe aus Fluiden, insbesondere zur Behandlung von Abwässern, dadurch gekennzeichnet, daß das zu behandelnde Fluid aus einem Hochbehälter abgeleitet, über mindestens einen Rohrkrümmer umgelenkt und dann einem Fallrohr derart zugeführt wird, daß sich vor, in und nach dem Rohrkrümmer wenigstens bereichsweise in der Strömung eine Kavitationszone ausbildet, wobei der kavitierte Teilstrom in der Kavitationszone entnommen wird.

2. Verfahren nach Anspruch 1, dadurch gekennzeichnet, daß das zu behandelnde Fluid einer Mehrzahl von hintereinander und/oder parallel geschalteten Kavitationszonen zugeführt wird.

3. Verfahren nach Anspruch 1 oder 2, dadurch gekennzeichnet, daß der abgetrennte Teilstrom mit dem Konzentrat an leicht flüchtigen Stoffen einem Tropfenabscheider zugeführt wird.

4. Verfahren nach einem der vorangehenden Ansprüche, dadurch gekennzeichnet, daß der abgetrennte dampfförmige Teilstrom mit einem Brüdenverdichter abgesaugt und ggf. ganz oder teilweise nachfolgend in einem Kondensator kondensiert wird.

5.  Vorrichtung zur Durchführung des Verfahrens nach einem der vorangehenden Ansprüche,

dadurch gekennzeichnet,

daß sie mit einem Hochbehälter (1), einem vorzugsweise horizontalen Auslaufstutzen (2), wenigstens einem sich an den Auslaufstutzen (2) anschließenden Rohrkrümmer (3) sowie einem Fallrohr (4) und mit einer Regelarmatur (5) im Bereich des Fallrohrendes ausgerüstet ist.

6.  Vorrichtung nach Anspruch 5,

dadurch gekennzeichnet

daß im Bereich (11) des Fallrohres (4) nach dem Rohrkrümmer (3) Einrichtungen (10) zur Entnahme bzw. Abtrennung des kavitierten Strömungsanteiles von der Hauptströmung vorgesehen sind.

7.  Vorrichtung nach Anspruch 6,

dadurch gekennzeichnet,

daß sich das Fallrohr (4) in seinem Durchmesser nach den Abtrenneinbauten (10) erweitert.

8.  Vorrichtung nach einem der vorangehenden Ansprüche, dadurch gekennzeichnet,

daß eine Mehrzahl von Rohrkrümmern (3) mit anschließenden

0172334

Fallstrecken (4) mit Abtrenneinrichtungen (10) des jeweiligen kavitierten Strömungsanteiles hintereinander und/oder parallel vorgesehen sind.

9. Vorrichtung nach Anspruch 8,

dadurch gekennzeichnet,

daß unterhalb des Fallrohres (4) ein Auffangbecken (7) sowie eine Pumpeinrichtung (9) zum Rückfördern der Flüssigkeit in dem Hochbehälter (1) vorgesehen sind.

10. Vorrichtung nach einem der vorangehenden Ansprüche, dadurch gekennzeichnet,

daß zur weiteren Behandlung des aus dem Hauptstrom entfernten kavitierten Strömungsanteiles Flüssigkeitsabscheider (14) und/oder Brüdenverdichter (17) und/oder Kondensatoren (18) vorgesehen sind.